# EUROPÄISCHE PATENTSCHRIFT

(11) **EP 1 315 943 B1**
(45) Veröffentlichungstag und Bekanntmachung des Hinweises auf die Patenterteilung: **09.11.2005**
(21) Anmeldenummer: 01971677.8
(22) Anmeldetag: 29.08.2001
(51) Int. Cl.: G01B 11/10, B60M 1/28

(54) **FAHRDRAHTINSPEKTION MIT GESTEUERTER SCHEIMPFLUG BEDINGUNG**
WIRE INSPECTION WITH CONTROLLED SCHEIMPFLUG CONDITION
CONTROLE DES CATENAIRES DE FILS AERIENS CONFORMEMENT A LA CONDITION DE SCHEIMPFLUG CONTROLEE

(30) Priorität: 08.09.2000 DE 10044432
(43) Veröffentlichungstag der Anmeldung: 04.06.2003
(73) Patentinhaber: SIEMENS AKTIENGESELLSCHAFT, 80333 München (DE)
(72) Erfinder: STOCKMANN, Michael, 83052 Bruckmühl (DE); SCHNEIDER, Richard, 82024 Taufkirchen (DE)
(86) Internationale Anmeldenummer: PCT/DE2001/003310
(87) Internationale Veröffentlichungsnummer: WO 2002/021076

(56) Entgegenhaltungen:
- EP-A- 0 789 258
- DE-C- 19 634 060
- US-A- 4 963 017

## Beschreibung

Die vorliegende Erfindung bezieht sich auf eine Einrichtung zur optischen Erfassung des Verschleißes an Fahrdrähten von Oberleitungen für elektrisch betriebene Fahrzeuge. Bei elektrischen Bahnen, denen der elektrische Strom über den Fahrdraht von Oberleitungen zugeführt wird, schleift der Stromabnehmer des Triebfahrzeugs während der Fahrt mit dem Schleifer seines Stromabnehmers Material an der berührten Unterseite des Fahrdrahtes ab. Mit wachsendem Verschleiß, d.h. zunehmendem Materialabtrag, erhöht sich der elektrische Widerstand des Fahrdrahts und es wächst auch die Gefahr eines Bruches des Fahrdrahtes. Geltende Vorschriften jeweiliger Bahnbetreiber betrachten eine Verringerung des stromführenden Querschnittes des Fahrdrahtes dann als unkritisch, wenn diese weniger als ca. 20% des Ausgangswertes ausmacht. Es ist daher vorgesehen, um Betriebsstörungen zu vermeiden, in angemessen zeitlichen Abständen aufgetretenen Verschleiß des Fahrdrahtes zu erfassen.

Eine Inspektion des Fahrdrahtes einer Oberleitung soll in den normalen Bahnbetrieb eingefügt ausgeführt werden können, ohne die Sicherheit des Betriebes und den regelmäßigen Zeitablauf desselben wesentlich zu stören. Auch muss diese Inspektionstätigkeit so ausgeführt werden, ohne dass jegliche Gefährdungen von Personen durch Maßnahmen der automatischen optischen Erfassung eintreten können.

Von langer Zeit her ist es bekannt, die Fahrdrähte mittels visueller Überprüfung und ggf. manueller Messung durch eine Person kontrollieren zu lassen. Dies z.B. deshalb, weil bereits erfahrungsgemäß sich über nur etwa 2 bis 3 cm Länge erstreckende Einschnürungen im Fahrdraht erfasst werden müssen, die durch lokale starke Erwärmung des Fahrdrahts auftreten. Eine solche starke Erwärmung ist z.B. die Folge einer hohen Stromaufnahme beim Anfahren von Lokomotiven schwerer Güterzüge.

Die Entwicklung des Standes der Technik führte bereits zu mehreren automatisch arbeitenden Verfahren und Geräten zur einschlägigen Inspektion von Oberleitungen. Speziell auf den Fahrdraht ausgerichtet wäre die DE-29 509 202 U1 zu nennen. Sie beschreibt ein Meßsystem, das aus einer Lichtquelle und einer CCD-Kamera besteht. Diese sind an den gegenüberliegenden Enden eines Schleifers eines Stromabnehmers montiert. Diese Kamera " blickt" in waagerechter Richtung oberhalb des Schleifers in die gegenüberliegende Lichtquelle und erfasst damit die Resthöhe des Drahtes im Durchlicht. Nachteilig ist bei dieser Lösung, dass die Geschwindigkeit des Messfahrzeugs, auf dem sich der Stromabnehmer befindet, auf ca. 60 Km/h beschränkt ist. Es müssen nämlich bei dieser Vorrichtung Vorkehrungen getroffen sein, mit denen im Bereich von Weichen der kreuzende Fahrdraht angehoben werden kann, damit die zwangsläufig nach oben über den Stromabnehmer hinausragenden Teile der Vorrichtung unter diesem kreuzenden Fahrdraht hindurchgleiten können. Bei mehreren in nahezu gleicher Höhe parallel verlaufenden Fahrdrähten, dies tritt z.B. in den Überlappungsbereichen und/oder bei Doppelfahrdrahtsystemen auf, kann nur ein Gesamtschatten erfasst werden, ohne über die zu prüfende Resthöhe des einzelnen Fahrdrahtes eine Aussage machen zu können.

Eine andere bekannte Ausführung einer einschlägigen Vorrichtung ist in DE-29 716 560 U1 und DE-196 13 737 C2 beschrieben. Die Lichtquelle und die Kamera sind dort in einer U-förmigen Vorrichtung angeordnet, wobei Lichtquelle und Kamera sich in den Schenkeln des U befinden. Der Fahrdraht verläuft zwischen diesen Schenkeln. Da ein Fahrdraht jedoch in der Regel längs des Schienenweges bei meistens konstanter Höhe seine seitliche Position ändert, d.h. im Zickzack verlaufend aufgehängt ist, ist bei diesem Stand der Technik ein ständiges mechanisches Nachführen der Messvorrichtung quer zur Fahrtrichtung unumgänglich. Auch dies führt dazu, dass die Maximalgeschwindigkeit des Messfahrzeuges erheblich beschränkt ist.

In J.M. van Gigch u.a. in "Schienen der Welt", pp. 20-31, April 1991, ist ein für die niederländischen Bahnen entwickeltes System beschrieben, das fünf nach oben gerichtete Kameras benötigt, mit denen die Breite der am Fahrdraht aufgetretenen Schleiffläche gemessen wird. Diese Kameras sind auf dem Dach eines Messwagens angeordnet. Um das Bild des jedoch gegenüber dem Fahrzeugdach gelegentlich in unterschiedlicher Höhe verlaufenden Fahrdrahtes im Schärfentiefe-Bereich halten zu können, ist eine weitere, jedoch horizontal orientierte Kamera angeordnet, mit der die jeweils augenblickliche Position des den Fahrdraht berührenden Stromabnehmers, bezogen auf das Wagendach, ermittelt wird. Das daraus gewonnene Signal dient als Regelgröße für eine nachführende Fokussiereinrichtung. Das hier beschriebene System ist jedoch nur für Fahrdrähte mit derart geformtem Querschnitt zu verwenden, bei dem das Maß des Verschleißes, die sogenannte Resthöhe des Fahrdrahtes eindeutig von der Breite der Schleiffläche abhängig ist. Ein bekanntes System, das ebenfalls den letztgenannten Nachteil hat, ist in der DE-197 11 504 A1 beschrieben. Es arbeitet mit einem Sensorelement auf der Basis induzierter Wirbelströme. In DE-198 50 118 ist ein Laser-Radar beschrieben, bei dem ein Fächer, der aus etwa 16 parallelen Strahlenbündeln besteht, vom Rand des Fahrzeugdachs aus mittels eines Drehspiegels dem hin und her laufenden Draht nachgeführt wird. Diese 16 Einzelstrahler erfassen fortwährend den absoluten Abstand der Messeinrichtung von nebeneinander liegenden Punkten auf der Oberfläche des Fahrdrahts. Diese Abstandswerte ergeben das Profil des Drahtes, wie es von der jeweiligen Seite zu sehen ist. Werden zwei solche Radarsysteme verwendet, kann das Profil von zwei Seiten erfasst werden. Daraus lässt sich die gesuchte Resthöhe ermitteln. Nachteilig ist hier der große Aufwand an optischen, mechanischen und elektronischen Komponenten. Vorteilhaft ist aber, dass die Messeinrichtung dieses Standes der Technik keinen Stromabnehmer, der während der Messung den Fahrdraht berührt, als Montageunterlage benötigt.

In der DE-196 34 060 ist eine Fahrdrahtmessvorrichtung beschrieben, bei der unterhalb der Schleifleiste am Stromabnehmer zwei Kameras angebracht sind. Mit diesen auf zueinander gegenüberliegenden Seiten positionierten Kameras wird von ebenfalls montierten Lichtquellen ausgesandtes und am Fahrdraht zurückgeworfenes Licht aufgenommen. Die aufgenommenen Bilder des Fahrdrahts werden ausgewertet. Es wird daraus die noch vorhandene Resthöhe des Fahrdrahtes bestimmt. Das Ergebnis dieser Bestimmung wird als unabhängig vom jeweiligen Querschnittsprofil des Fahrdrahts angegeben. Damit trotz der bekanntermaßen in einer im wesentlichen waagerechten Ebene hin und her laufenden Hängung des Fahrdrahtes ein stets scharfes Bild des Fahrdrahtes mit der Kamera aufzunehmen ist, ist die Anwendung der bekannten Scheimpflug-Regel vorgesehen. Bekannt ist diese Regel zur Vermeidung von Unschärfen bei der Ausführung fotografischer Architekturaufnahmen mittels sogenannter Balgenkameras. Diese Regel besagt, - angewendet auf die vorliegende Erfindung - dass die zur Aufnahme des Bildes des Fahrdrahtes bestimmte Bildebene der Kamera, die Ebene des Objektivs der Kamera und die Ebene der variierenden Positionen des mit der Kamera aufzunehmenden Fahrdrahtes so orientiert sind, dass diese drei Ebenen sich in einer Geraden schneiden.

In der DE-OS-24 40 085 und der DE-OS-25 21 229 ist eine ebenfalls einschlägige Einrichtung beschrieben, mit der die Höhen- und die Seitenlage des Fahrdrahts optisch erfasst fortlaufend zu messen sind. Diese Erfassung erfolgt, bezogen auf den Fahrdraht, mittels zweier gegenüberliegenden Aufnahmeeinrichtungen. Um die darin verwendeten Sensoren dem Hin- und Herlauf des Fahrdrahts nachführen zu können, sind diese auf dem Dach des Fahrzeugs auf einem dort quer zur Richtung des Fahrdrahts verfahrbaren Schlitten montiert oder es ist vorgesehen, dass die Optik dieser Sensoren richtungsmäßig dem Fahrdraht nachgeführt werden. Ohne Angabe wie dies auszuführen ist, ist lediglich erwähnt, dass dabei auch die Fahrdrahtdicke bestimmt werden könnte.

Zum Zwecke der Inspektion des Längskettenwerks und der Quertrageinrichtungen für einen Fahrdraht ist in der nicht vorveröffentlichten, älteren Patentanmeldung mit dem amtlichen Aktenzeichen 199 36 448.6 (DE-A1-19936 448 veröffentlicht 15,3,2001) (der Anmelderin der vorliegenden Erfindung) eine Vorrichtung beschrieben. Bereits zur Erfindung dieser älteren Anmeldung beschriebene Maßnahmen können auch bei der vorliegenden Erfindung angewendet werden und der Inhalt der Beschreibung dieser vorausgehenden Erfindung sei hiermit zum Bestandteil der Erfindungsoffenbarung zur vorliegenden Erfindung einbezogen. Diese die Prüfung des Längskettenwerks eines Fahrdrahtes betreffende ältere Erfindung umfasst zwei Dioden-Zeilenkameras, mit denen von den Rändern des Daches des Inspektions-Fahrzeugs schräg nach oben blickend ein fortlaufend "unendlich" langes Bild des Längskettenwerks aufzunehmen ist. Diese gewonnenen Informationen werden abgespeichert. Als Beleuchtung dient bei dieser nicht vorbekannten Vorrichtung jeweils eine beispielsweise 15 W starke Infrarot-Laserdiode in den beiden zugehörigen Scheinwerfern. Die Verwendung eines solchen Lasers ermöglicht verminderte Baugröße und die des Infrarot-Lichts vermeidet Blendungen. Das von der jeweiligen Laserdiode emittierte Licht wird mit Hilfe eines ausgedehnten Rasters mit Zylinderlinsen bestückt zu einem nur mehrere Millimeter dicken Beleuchtungsfächer mit einem Öffnungswinkel von z.B. etwa 40° aufgeweitet. Dieser quasi eine ebene Scheibe bildende Beleuchtungsfächer ist mit seiner emittierten Strahlung so orientiert, dass diese Ebene senkrecht zur Achse des Fahrdrahts ausgerichtet ist. Die Rasterlinse besteht z.B. aus etwa 100 Einzellinsen. Der Sinn dieser Maßnahme ist, dass, bezogen auf das Auge, dieses nicht den eigentlichen punktförmig strahlenden starken Laser sieht, sondern statt dessen etwa 100 schwächere, nebeneinander liegende Laser empfindet. Diese Maßnahme dient zur Erfüllung der Vorschriften betreffend den Schutz des Auges gegenüber Laserstrahlung. Da zudem die von dieser Lasereinrichtung erzeugte Strahlungsstärke mit zunehmendem Abstand infolge des z.B. 40° bemessenen Öffnungswinkels des Strahlfächers linear abfällt, ist bereits ab einem Mindestabstand von 2 m jegliche Gefährdung des Auges nach den international gültigen Laser-Strahlenschutzbestimmungen ausgeschlossen, soweit eine eventuelle maximale Belichtungszeit der Augenpupille kleiner als 2 ms beträgt. Dieses Zeitmaß bleibt unterschritten, wenn das Fahrzeug mit einer Geschwindigkeit von mindestens 20 Km/h fährt.

Eine Aufgabe der vorliegenden Erfindung ist, eine Einrichtung bzw. ein Inspektionsprinzip anzugeben, die/das oben erwähnte Nachteile des Standes der Technik vermeidet. Insbesondere ist es Aufgabe der vorliegenden Erfindung, das für das Längskettenwerk ausgerüstete und bemessene Prinzip der älteren Erfindung optimiert für die Diagnose bzw. Inspektion des Verschleißes des Fahrdrahtes verwendbar zu machen.

Diese Aufgabe wird gelöst mit den Merkmalen des Patentanspruches 1 und weitere Ausgestaltungen und Weiterbildungen der Erfindung gehen aus den Unteransprüchen hervor.

Zur Vereinfachung des Verständnisses der vorliegenden Erfindung wird diese und werden aus der älteren, nicht vorveröffentlichten Erfindung übernommene Merkmale der neuen erfindungsgemäßen Einrichtung anhand der beigefügten Figuren beschrieben.
Figur 1 zeigt die Zueinanderanordnung eines Paares eines Scheinwerfers als Beleuchtungseinheit und einer Zeilenkamera sowie den Öffnungswinkel der Beleuchtung und den Öffnungswinkel des Objektivs der Kamera und dazu eine augenblickliche Position eines Fahrdrahts. Diese Figur zeigt ergänzend ein weiteres Paar eines Scheinwerfers mit zugehöriger Kamera in deren Positionen mit deren Öffnungswinkeln zueinander und zum erstgenannten Paar.
Figur 2 zeigt eine Aufsicht zur Figur 1.
Figur 3 zeigt die bekannten Ausrichtungen des Objektivs der Kamera, der darin enthaltenen Bildebene und der Ebene der maximal seitlich ausgelenkten Positionen des Fahrdrahtes, und zwar gemäß der Scheimpflug-Regel.
Die Figuren 3A bis 3C zeigen zur Figur 3 erfindungsgemäß ergänzende Maßnahme.
Figur 4A zeigt den Querschnitt eines in Deutschland gebräuchlichen Fahrdrahtes.
Figur 4B zeigt den Querschnitt eines anderen gebräuchlichen Fahrdrahtes.
Figur 5 ergänzt Erläuterungen zur Signalauswertung.

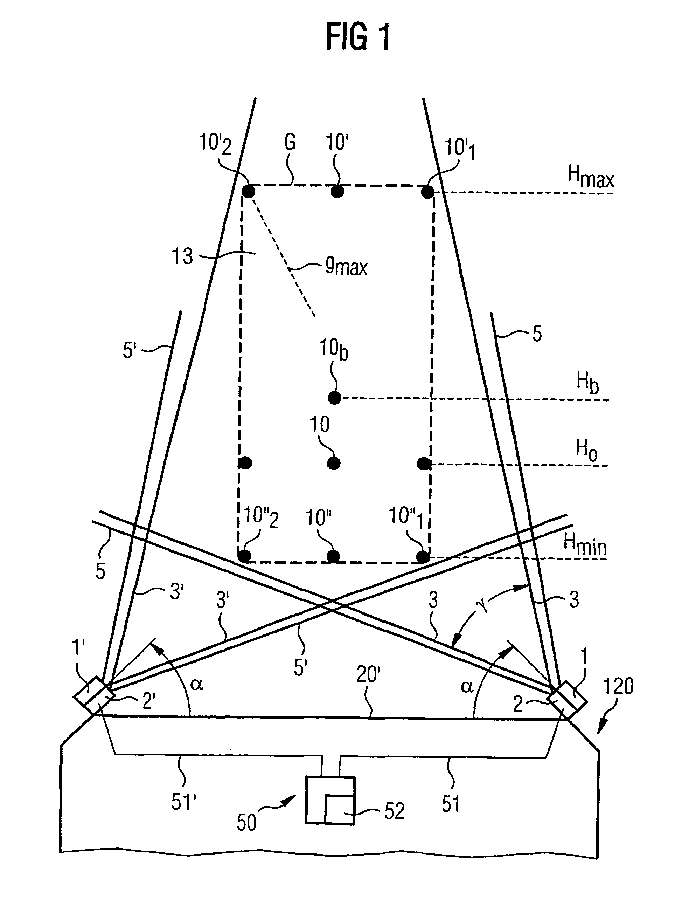

Die Figur 1 zeigt eine erfindungsgemäße Einrichtung, gesehen in Richtung des Fahrdrahtes 10, von dem somit in Figur 1 der Querschnitt zu sehen ist. Mit 10' und 10" sind auch Positionen des Fahrdrahts in maximaler Höhe Hmax und minimaler Höhe Hmin gezeigt. Der Übersichtlichkeit halber nicht dargestellt sind der Hänger und das Tragseil des Fahrdrahts 10. Mit 20 ist das angedeutete Dach des nicht weiter dargestellten Fahrzeugs 120 bezeichnet, auf dem ein erstes Paar Elemente, bestehend aus einem Scheinwerfer 1 als Beleuchtungseinheit und einer Zeilenkamera 2 angebracht ist. Diese sind aus noch nachfolgend erörterten praktischen Gründen möglichst nahe beieinander benachbart angeordnet. In ihren Positionen zueinander können der Scheinwerfer 1 und die Kamera 2 in derselben Ebene auch miteinander vertauscht angeordnet sein. Mit 3 ist der oben zur älteren Erfindung bereits beschriebene Beleuchtungsfächer derjenigen Laserstrahlung bezeichnet, die von einer Halbleiter-Laserlichtquelle als Scheinwerfer 1 ausgesandt wird. Dieser Beleuchtungsfächer hat in der Ebene der Figur wie dargestellt einen vorgebbaren Öffnungswinkel von z.B. hier 45°. Die fokussierende Optik des Scheinwerfers 1 ist als Zylinderlinsenoptik ausgebildet, sodass in der zur Darstellungsebene der Figur 1 senkrechten Richtung dieser Beleuchtungsfächer vergleichsweise sehr dünn z.B. kleiner 10 mm dick bemessen ist. Mit diesem Fächer 3 wird somit augenblicklich stets nur ein entsprechend kurzes Streckenstück des Fahrdrahts 10 seitlich beleuchtet. In der Ebene der Figur 1 ist der Öffnungswinkel γ so groß bemessen und mit seiner Achse 13 so ausgerichtet, dass der Fahrdraht 10 bei jeglicher, nachfolgend noch näher erläuterter, in Frage kommender extremer Höhenlage 10' und 10" und auch bei maximaler Auslenkung 10₁ und 10₂ seines Zickzackverlaufs innerhalb des Bereiches G stets innerhalb des Beleuchtungsfächers 3 des Scheinwerfers liegt. Damit ist eine Nachführung des Scheinwerfers 1 entbehrlich und dieser kann vorteilhafterweise auf dem Fahrzeugdach 20 fest montiert und fest ausgerichtet angebracht sein.

Mit 2 ist die bereits erwähnte Zeilenkamera bezeichnet. Vom Öffnungskegel des Objektivs der Kamera, üblicherweise und so auch nachfolgend als Öffnungswinkel bezeichnet, sind nur die in der Projektion der Figur 1 sichtbaren Randstrahlen 5 angegeben. Der Fächer des Scheinwerfers 1 und der Öffnungswinkel der Kamera 2 sind wie ersichtlich für den Inspektions-/Gegenstandsbereich G mit darin der jeweiligen Gegenstandsweite g ineinander liegend ausgerichtet und bemessen, so dass im praktischen Inspektionsbetrieb der zu untersuchende Fahrdraht sich stets innerhalb des Beleuchtungsfächers und des Öffnungswinkels der Kamera befindet und der Fahrdraht stets optisch messtechnisch erfasst werden kann. Die Zeilenkamera hat eine Zeile - ggf. auch mehrere parallele Zeilen zwecks Erhöhung der Messempfindlichkeit - mit entlang der ggf. jeweiligen Zeile angeordneten Sensorpixeln, z.B. CCD-Sensoren.

Mit einem Elementepaar, bestehend aus Scheinwerfer 1 und Kamera 2, kann eine Kameraabbildung des Fahrdrahtes, wie aus der Figur ersichtlich, nur in diesem einen Richtungsbereich des Fächers 3 erfolgen.

Für Bildaufnahme aus noch einer weiteren Richtung ist ein weiteres Elementepaar bestehend aus Scheinwerfer 1' und Kamera 2' vorgesehen. Auch diese Elemente sind auf dem Fahrzeugdach 20 in wie beschrieben gleicher Weise ausgeführt angebracht. Sie sind wie dargestellt dem Elementepaar 1, 2 gegenüberliegend auf dem Dach 20 des Fahrzeugs 120 angeordnet. Mit 3' und 5' sind der Beleuchtungsfächer des Scheinwerfers 1' und der Öffnungswinkel der Kamera 2' bezeichnet und kenntlich gemacht. Die Wirkungsbereiche dieses Elementepaares 1', 2' und des Elementepaares 1, 2 können in einer Ebene, hier der Darstellungsebene der Figur 1, von miteinander durchdringend bis nahe hintereinander parallelliegend positioniert ausgerichtet sein. Die erstere Ausführung lässt die Schleiffläche hell erscheinen, erfordert aber Justageaufwand. Die zweite Ausführung ist technisch einfacher, kann aber Kontrastprobleme ergeben.

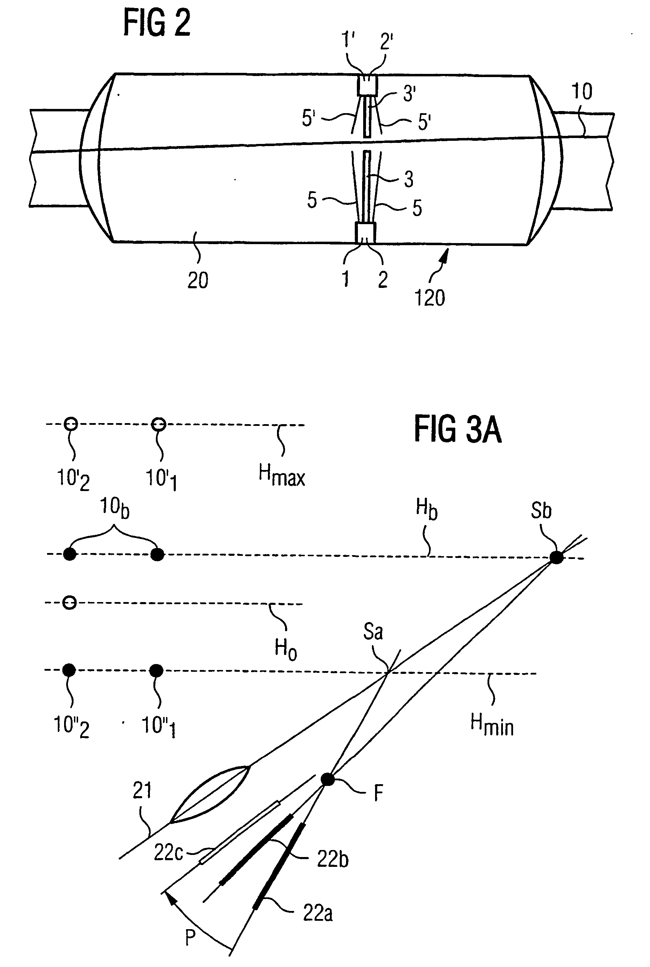

Figur 2 zeigt eine Aufsicht auf das Dach 20 eines Fahrzeugs 120 unterhalb des zum Fahrweg 30 etwas schräg verlaufenden Fahrdrahtes 10 und mit den auf dem Dach angebrachten zwei Kameras 2, 2' und zwei Scheinwerfern 1, 1' wie in Figur 1.

Da in Bezug auf sowohl die Kamera 2 als auch die Kamera 2' bei Fortbewegung des Fahrzeugs 120 auf dem Fahrweg wegen innerhalb der Distanz 10₁ bis 10₂ des hin und her laufenden Fahrdrahts 10 die Gegenstandsweite g und deren Richtung, bezogen auf die Kamera, sich in definierten Grenzen laufend ändert, erfolgt die Anwendung der bekannten Scheimpflug-Regel mit richtungsabhängiger Anpassung der Bildweite b innerhalb der Kamera gemäß der bekannten Beziehung 1/g + 1/b = 1/f mit f = Brennweite des Objektivs.

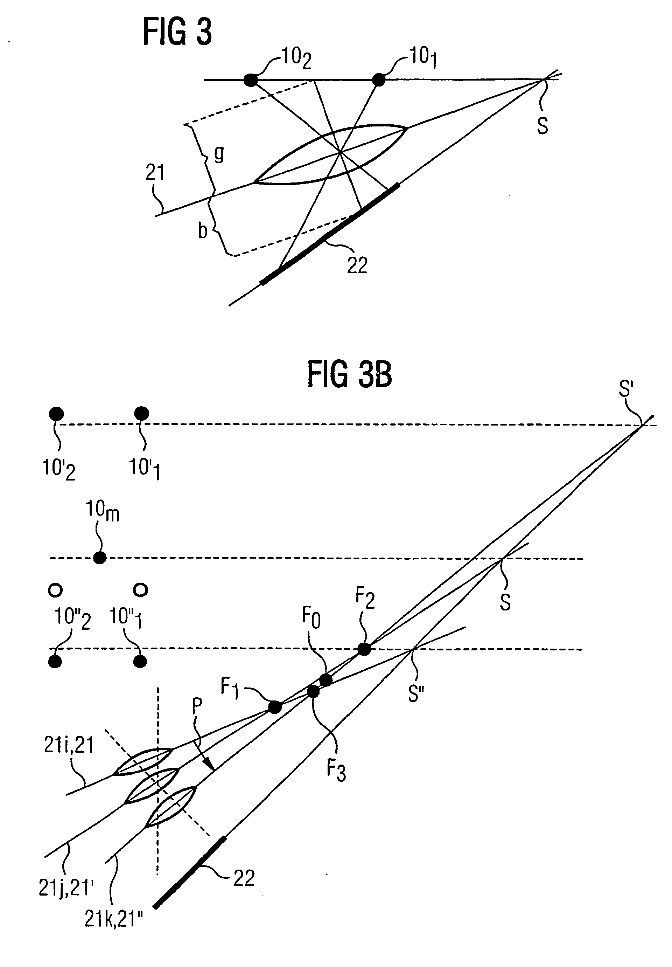

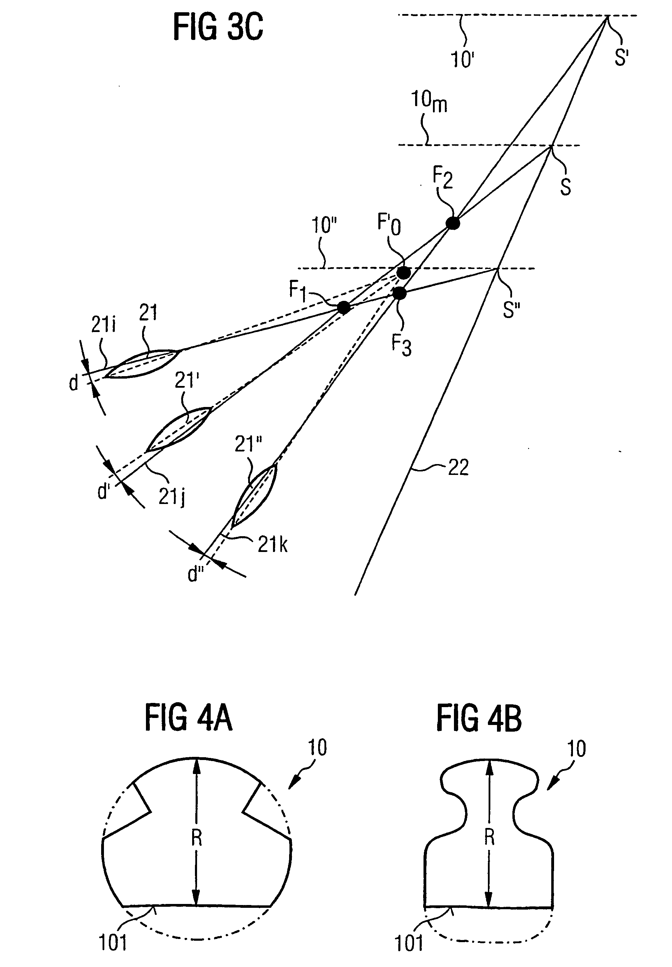

Zur Erläuterung der Scheimpflug-Regel dient die Figur 3. Mit 21 ist die Ebene des Objektivs der Kamera 2 bezeichnet. Mit 22 ist die entsprechend der Scheimpflug-Regel orientierte Bildebene der Kamera 2 bezeichnet. Mit 10₁ sind einmal die rechte extreme Position und mit 10₂ einmal die linke extreme Position des dazwischen im Zickzack hin und her laufenden Fahrdrahts 10 gezeigt. Wenn die Ebene dieser Positionen 10₁ bis 10₂, die Ebene des Objektivs 21 und die Bildebene 22 sich in der Geraden S schneiden, ist die Scheimpflug-Regel erfüllt.

Wenn die Höhe des aufgehängten Fahrdrahtes 10 über dem Fahrweg ein konstantes Maß wäre, könnte der Winkel zwischen der Objektivebene 21 und der Bildebene 22 für gleichbleibende Bildschärfe in dieser Bildebene 22 konstant gehalten bleiben. Da aber an Bahnübergängen oder in Tunneln die Höhe des dort angebrachten Fahrdrahtes vergleichsweise zur regelmäßigen Anbringung verändert sein kann, ist erfindungsgemäß eine weitere Korrekturmaßnahme vorzusehen, um auch bei Höhenlageänderung des Fahrdrahts stets noch genügend scharfe Abbildungen des Fahrdrahts in der Bildebene 22 zu erreichen.

Als eine solche Korrekturmaßnahme ist erfindungsgemäß vorgesehen, dass entweder die Objektivebene 21 oder die Bildebene 22 der Kamera 2 - ggf. auch jede der beiden Ebenen aufeinander abgestimmt - in gesteuert angepasster Weise nachgeführt wird. Mit Rücksicht auf die Schärfentiefe der Kameraoptik und mit Rücksicht darauf, dass die Höhenänderungen der Position des Fahrdrahts in der Regel nur zwischen etwa -0,5 und +1,5 m schwanken, genügt es erfahrungsgemäß mit der wie folgt beschriebenen Korrekturmaßnahme insgesamt lediglich weitgehend angenähertes Einhalten der Scheimpflug-Regel bezogen auf jeweilige Höhenlage des Fahrdrahts vorzusehen. Grundprinzip der wahlweisen Varianten dieser Maßnahme ist, für die Bildebene 22 oder die Objektivebene 21 - ggf. auch für jede dieser beiden Ebenen - eine Schwenkbarkeit P ihrer Position um nur eine einzige anzugebende, zu definierende Achse F vorzusehen, nämlich um für die Praxis stets genügend Bildschärfe der Abbildung des Fahrdrahts zu erreichen.

Zur Erläuterung der Varianten dieser erfindungsgemäß vorzusehenden Korrekturmaßnahme sei auch auf die Figuren 3A, 3B, 3C hingewiesen. Die Achse F steht in allen Fällen senkrecht auf der Darstellungsebene der Figur 1, die auch die Ebene des Beleuchtungsfächers 3 und der optischen Abbildung ist. In diesen Figuren sind die möglichen, notwendigerweise zu erfassenden Randpositionen des Fahrdrahtes 10 mit maximaler und minimaler Höhenlage 10' bzw. 10" des Fahrdrahts gezeigt. Die extremen rechten und linken seitlichen Auslenkungen sind mit 10₁ bzw. 10₂ bezeichnet. Es gibt somit 10"₂ die niedrigste linke Höhenlage des Fahrdrahtes 10 an. Entsprechendes gilt für die übrigen Positionen 10'₁, 10'₂ und 10"₁. Diese Positionen sind auch die Eckpunkte des Inspektions-/Gegenstands-Bereiches G.

Es wurde festgestellt, dass es ausreichend sein kann, für eine erste Variante als eine erste Angabe für die Definition der Position der Achse F des gesteuerten Schwenkens, und zwar hier als Beispiel der Bildebene, von den Positionen 10"₁ und 10"₂ niedrigster Höhenlage des Fahrdrahts 10 auszugehen und für diese die Winkelstellung der Bildebene gemäß der Scheimpflug-Regel exakt einzustellen. In Figur 3A ergibt dies die ausgerichtete Bildebene 22ₐ. Für die weitere notwendige Angabe zur Position der Achse F wird von einer höherliegenden Fahrdrahtlage ausgegangen, für die der Index b verwendet wird. Ein optimaler Bereich für diese zu wählende Höhenlage b liegt erfahrungsgemäß zwischen der regelmäßigen Höhenlage des Fahrdrahtes, nämlich wie sie in den Figuren 1 und 3 mit dem Fahrdraht 10₀ angegeben ist, und einer Höhenlage H_{b}, die ausgewählt etwas oberhalb der voranstehend angegebenen regelmäßigen Höhenlage H₀ des Fahrdrahts ist. In der in Figur 3_{A} angegebenen Position und Ausrichtung der Bildebene 22_{b} ist ebenfalls die Scheimpflug-Regel erfüllt.

Wie aus Figur 3A ersichtlich, ergeben sich analog der Figur 3 in Figur 3A die Schnittpunkte Sₐ und S_{b}, nämlich entsprechend dem Schnittpunkt S in Figur 3. Die Position der erfindungsgemäß vorzusehenden, oben bereits erwähnten Schwenkachse F für die zusätzliche Steuerung der Position und Ausrichtung der jeweiligen Bildebene 22 ergibt sich aus der Schnittgeraden der Bildebenen 22ₐ und 22_{b}.

Die Schwenkung P der Bildebene 22 erfolgt dann in der Praxis abhängig von der aktuellen Höhenlage des Fahrdrahts 10 erfindungsgemäß zwischen der Position und Ausrichtung der gezeigten Bildebene 22ₐ, die hier die eine Grenze des Schwenkungsbereichs der Schwenkung P ist, und einer Position und Ausrichtung einer Bildebene 22_{c}. Diese liegt jenseits bzw. in der Figur 3A oberhalb der Bildebene 22_{b}. Diese Bildebene 22_{c} wird für den Fall der maximalen Höhenlage des Fahrdrahtes 10' als Bildebene für die Abbildung mittels der Kamera 2 erfindungsgemäß mittels der Schwenkung P angesteuert. Die zwangsläufige Abweichung der Ausrichtung der Bildebene 22_{c} von der Scheimpflug-Regel hat sich in der Praxis wegen der großen Gegenstandsweite g des Fahrdrahts und damit größerer Tiefenschärfe als meistenteils vernachlässigbar erwiesen.

Eine zweite Variante wird anhand der Figur 3B ins Einzelne gehend dargelegt, wobei bei der Ausführungsform dieser Figur ein Schwenken der Objektivebene 21 anstelle des Schwenkens der Bildebene 22 nach Figur 3A vorgesehen ist.

Schon oben war darauf hingewiesen, dass zur Einhaltung der Scheimpflug-Regel bei wie auch hier vorgegeben variabler Gegenstandsebene, das ist hier die jeweilige Höhenlage des Fahrdrahts, wahlweise die Objektivebene oder die Bildebene in ihrer Position zueinander eingestellt werden können. Es ist also optisch äquivalent, hier die Bildebene oder die Objektiv-Ebene in ihrer Position anzupassen. Im Falle der Erfindung kann es vorteilhafter sein, die Bildebene 22 in ihrer Position feststehend auszuführen, da in dieser Bildebene die Zeilen-Sensoranordnung zur Bildaufnahme und wenigstens Anteile ihrer zugehörigen elektronischen Ausrüstung anzuordnen sind. Diese sind gewichtsmäßig schwerer und großvolumiger als das Objektiv der Kamera, weshalb es dann günstiger ist, letzteres in seiner Position der Scheimpflug-Regel folgend gesteuert nachzuführen. Die Schwenkung des Objektivs gegenüber der Achse der optischen Abbildung bedingt jedoch, dass das Objektiv für diesen Fall für einen entsprechend größeren Bildwinkelbereich optisch korrigiert sein muss. Es können auch sowohl die Bild-Ebene als auch die Objektivebene aufeinander abgestimmt, die Scheimpflug-Regel angenähert erfüllend, nachgeführt werden, was jedoch technisch sehr aufwendig ist.

Die Figur 3B zeigt drei für die zweite Variante der erfindungsgemäßen Korrekturmaßnahme auswählbare Höhenlagen des Fahrdrahts. Zum Beispiel sind dies die Höhenlage Hmax mit dem Fahrdraht 10', die niedrigste Höhenlage Hmin mit dem Fahrdraht 10" und eine mittlere Höhenlage mit dem Fahrdraht 10ₘ, die z.B. die Normlage des Fahrdrahts ist.

Für das Verständnis dieser Variante sei hier gedanklich davon ausgegangen, drei - oder auch noch mehr - Objektivebenen 21ᵢ, 21ⱼ, 21ₖ ... so positioniert zu wählen, dass in deren Positionen die Scheimpflug-Regel jeweils für die wahlweisen Fahrdrahtlagen 10" , 10ₘ und 10' - sowie ggf. weiteren Fahrdrahtlagen - bei feststehender Bildebene 22 erfüllt ist. Analog der Figur 3A ergeben sich hier die Positionen für zwei und für eine vorteilhafte Weiterbildung als dritte Variante für drei - ggf. für noch mehr - Achsen. Es sind dies in der Figur die Achse F1 als Schnittgerade der Objektivebenen 21ᵢ und 21ⱼ, die Achse F2 als Schnittgerade der Objektivebenen 21ⱼ und 21ₖ sowie die dritte Achse F3 als Schnittgerade der Ebenen 21ᵢ und 21ₖ. Die Achse F1 entspricht im übrigen der Achse F der Figur 3A. Bei den Ausführungsformen nach Figur 3B wird also auch der Bereich der Fahrdrahtlagen zwischen H₀ und Hₘₐₓ der exakten Scharfeinstellung nach der Scheimpflug-Regel angenähert. Es hat sich für die Praxis erwiesen, dass noch sehr hohe Annäherung an die Scharfeinstellung nach der Scheimpflug-Regel für alle möglichen Positionen des Fahrdrahts zu erreichen ist, wenn man - wie in Figur 3A - auch hier erfindungsgemäß wiederum nur eine Schwenkachse F₀ vorsieht, die jedoch - wie noch näher ausgeführt - ausgewählt positioniert wird. Die aus den Positionen der Achsen F1 und F2 gemäß dieser zweiten Variante abgeleitet optimierte Position der Achse F₀ liegt im Bereich zwischen den genannten Achsen F1 und F2. Die genannte dritte Achse F3 lässt zusätzlich erkennen, dass die optimierte Lage der Schwenkachse F₀ in einem Bereich etwas abseits der Verbindungsgeraden zwischen den Positionen der Achsen F1 und F2 liegt.

Als erfindungsgemäße Korrekturmaßnahme dieser zweiten Variante ist hier also vorgesehen, die an die Erfüllung der Scheimpflug-Regel angenähert gesteuert zu positionierenden Ebenen, hier der Objektivebene, alternativ jedoch auch der Bildebene, um die einzige Achse F₀, wie mit P angegeben, von der aktuellen Fahrdraht-Höhenlage abhängig gesteuert zu schwenken. Dies führt dazu, dass, z.B. gegenüber Figur 3A, der obere Höhenlagenbereich des Fahrdrahts der Scheimpflug-Regel hinsichtlich der Scharfeinstellung in der Bildebene besser angenähert ist, obwohl auch für die ausgewählten Ebenen 21, 21' und 21" die Scheimpflug-Regel nicht mehr exakt erfüllt ist.

Die Positionen und Ausrichtungen der als Ausgangspunkt der voranstehenden Überlegungen zugrundegelegten Ebenen 21ᵢ, 21ⱼ und 21ₖ und die korrespondierenden, nach der Erfindung ausgerichteten Ebenen 21, 21' und 21" liegen in der Figur 3B jeweils so dicht beieinander, dass sie in dieser Figur hinsichtlich ihrer Darstellung nicht unterscheidbar sind und daher diese Bezugszeichen doppelt haben.

Eine noch optimalere Anpassung ist bei dieser Variante dann erreicht, wenn die Position der Schwenkachse F₀ wie folgt, siehe Figur 3C, zusätzlich korrigiert bemessen ist. Eine gegenüber der Position der Schwenkachse F₀ noch optimalere Position lässt sich für die Schwenkachse F₀' aus Berechnungen angeben. Diese ist die Bildung der Summe der Quadrate der Winkelabweichungen d, d' und d" . Es sind dies die Winkelabweichungen d zwischen der wie oben erfindungsgemäß ausgerichteten Ebene 21 und der exakt nach der Scheimpflug-Regel ausgerichteten Ebene 21ᵢ, hier des Objektivs, d' die Winkelabweichung zwischen den Ebenen 21' und 21ⱼ und d" zwischen den Ebenen 21" und 21ₖ. Wie schon oben erwähnt, sind die Positionen der Ebenen 21ᵢ, 21ⱼ und 21ₖ z.B. errechnet.

Die Position der Schwenkachse F₀', für die die Summe der Quadrate der Winkelabweichungen d, d' und d" ein Minimum ist, - mittels eines Rechners zu ermitteln - ist dann die auf diese Weise noch besser bestimmte Positionierung der Achse F₀ der zweiten Variante. Mit der Schwenkung der Objektivebene, alternativ der Bildebene oder beider Ebenen aufeinander abgestimmt, lässt sich eine noch besser optimierte jeweilige Positionierung dieser Ebenen zwecks Scharfeinstellung des Fahrdrahts in der Bildebene für jegliche verschiedene Höhenlagen erreichen.

Die so korrigiert bestimmte Achse F₀' ist somit eine noch optimaler positionierte Schwenkachse.

Analog die gleiche Korrekturmaßnahme mit der gleichen Minimierung der Summe der Quadrate ist erfindungsgemäß auch für den Fall anwendbar, in dem anstelle der Objektivebene die Bildebene 22 zu schwenken vorgesehen ist, wie dies in Figur 3A der Fall ist.

Die voranstehend zur Figur 3B, 3C beschriebene Korrektur mit Schwenken um eine optimierte Achse F₀ - gleichgültig ob das Objektiv oder die Bildebene geschwenkt werden - kann auch so ausgeführt sein, dass mehr als die dort angegeben drei Höhenlagen des Fahrdrahtes gemäß der Scheimpflug-Regel exakt eingestellt ausgewählt werden.

Insbesondere empfiehlt es sich, anstelle auf die maximalen Höhenlage die nach der Scheimpflug-Regel exakte Einstellung der Objektivebene 21' auf eine etwas darunter liegende Höhenlage zu beziehen und sinngemäß auch die in Figur 3B nach der Scheimpflug-Regel eingestellte Objektivebene 21" auf eine etwas höhere Fahrdrahtlage als Hmin zu beziehen. Dies deshalb, weil damit in diesen Randzonen der Tiefenschärfebereich des Objektivs noch zusätzlich besser genutzt wird.

Lediglich der Vollständigkeit halber sei eine weitere, allerdings sehr aufwendige erfindungsgemäße Korrekturmaßnahme beschrieben.

Wie aus der Figur 3B zu entnehmen ist, kann für sämtliche Höhenlagen des Fahrdrahtes das Objektiv bzw. die Objektivebene 21 exakt der Scheimpflug-Regel folgend orientiert werden. In Figur 3B sind die Schnittpunkte S, S' und S" eingetragen, die die exakte Lage entsprechend der Scheimpflug-Regel bestimmen. Diese weitere Korrekturmaßnahme besteht darin, dass das Objektiv der Kamera oder die Bildebene derselben mechanisch an z.B. einem Gestänge so geführt wird, dass das gegenüberliegende Ende des Gestänges entlang der Verbindungslinie S₀ der Schnittpunkte S'-S-S" mit Einstellung der jeweiligen Gegenstandsweite g bzw. Bildweite b geführt wird. Damit würde die Abbildung des Fahrdrahts in jeglicher Position optimiert sein.

Die aktuelle Höhenlage bzw. die augenblickliche Höhenänderung des Fahrdrahtes kann einerseits vom noch nachfolgend zu beschreibenden Meßsystem selbst erkannt werden, indem im Videosignal der in der Bildebene der Kamera angebrachten Diodenzeile der Kontrast bestimmt wird und eine Schwenkung der Diodenzeile bzw. der Ebene derselben um die Achse F durchgeführt wird, bis der Kontrast im Videosignal (wieder) ein Maximum erreicht.

In vielen Fällen ist aber ohnehin eine dem Stand der Technik entsprechende Höhenmesseinrichtung für den Fahrdraht vorhanden, die stets die aktuelle Höhenlage des Fahrdrahtes und damit das Maß über dem Fahrzeugdach angibt. In diesem Falle erfolgt die Schwenkung der Bildebene um die Achse F entsprechend der aktuell angezeigten Fahrdrahthöhe.

Um bei den gegebenen Bedingungen, nämlich 1) vorgegebene regelmäßige Höhe des Fahrdrahtes (z.B. 5 m), 2) bekannte Höhe des Fahrzeugdaches (z.B. 3,70 m), 3) bekanntes Maß des Hin- und Herlaufes des Fahrdrahtes (0,9 m), 4) bekannte maximale Höhenänderung des Fahrdrahts(-0,5; 1,5 m), ist für die Erfindung vorgesehen, die Brennweite f des Objektivs der Kamera 2, 2' z.B. auf 80 bis 150 mm zu bemessen. Mit einer Zeilenkamera 2 mit 4096 (2¹²) Pixeln in der Zeile der Kamera erreicht man bei der so bemessenen Brennweite eine Auflösung in der Gegenstandsweite g, d.h. auf der Oberfläche des Fahrdrahtes, von etwa 0,1 bis 0,3 mm. Diese Auflösung ist höher, als sie mit der (nicht vorveröffentlichten) älteren Erfindung zu erreichen ist. Bei einer noch von der Blende abhängigen, gering bemessenen Schärfentiefe von höchstens 10 cm erreicht man in diesem Brennweiten-Bereich bei wie oben angegeben im Mittel angenähert Einhaltung der Scheimpflug-Regel praktisch optimal scharfe Bilder in der Bild-Ebene, d.h. auf der Zeile der Sensorpixel der Kamera 2.

Bekanntermaßen ist mit Laserbeleuchtung eine störende Granulation in erzeugten Bildern verbunden. Dies beruht auf Interferenzeffekten der kohärenten Strahlung. Bei der Erfindung ist das Auftreten dieser Störung vermieden, indem für die Scheinwerfer 1, 1' solche Laserdioden verwendet werden, die statt eines einzigen Emitters mehrere Emitter besitzen, die in einem so großen Abstand voneinander in der Diode angeordnet sind, dass zwischen den einzelnen Diodenstrecken keine solche Wechselwirkung mehr auftritt, die zu Kohärenz der Lichtbündel der einzelnen Diodenstrecken untereinander führt. Mit anderen Worten heißt dies, dass die Vielzahl der Laserstrahlungen der einzelnen Diodenstrecken zueinander ein im wesentlichen inkohärentes Licht liefern, ohne dass damit die hohe Energieeffizienz der Laserlichterzeugung und -strahlung für den Scheinwerfer auch nur gemindert wäre. Für die Erfindung genügt es, einen Scheinwerfer mit einer Laserdiode mit etwa 15 bis 25 W elektrischer Leistung zu verwenden.

Bei einer z.B. vorgegebenen Fahrtgeschwindigkeit 80 Km/h des Messfahrzeugs empfiehlt es sich, eine Belichtungszeit der Kamera mit maximal 0,5 ms zu wählen. Innerhalb einer so bemessenen Belichtungszeit wird bei der angegebenen Fahrtgeschwindigkeit die Kamera um 11 mm fortbewegt. Diese Bewegung des Bildes ist quer zur in der Bildebene angeordneten Diodenzeile der Kamera ausgerichtet und ist, bezogen auf die Darstellungsebene der Figur 3A, 3B, senkrecht zu dieser ausgerichtet. Man erreicht mit dieser Maßnahme bzw. Bemessung eine vorteilhafte bzw. gewünschte Bewegungsunschärfe in der Abbildung, die einer Mittelwertbildung der Helligkeitswerte über diese 11 mm entlang des Fahrdrahtes und quer zur Messrichtung entspricht. Die seitliche Auslenkung der Zick-Zack-Bewegung des Fahrdrahtes beträgt in diesem Zeitintervall maximal 0,3 mm, was in der Größenordnung der Auflösung der Messeinrichtung liegt und somit ein Effekt noch vernachlässigbar ist. Bei einer jedoch z.B. vierfach niedrigeren Geschwindigkeit, d.h. 20 Km/h, würde bei gleich groß bemessener Belichtungszeit die Strecke auf dem Fahrdraht, über die die Mittelung erfolgt, auf ein Viertel des obigen Wertes reduziert sein. Um dies zu vermeiden, empfiehlt es sich, die Belichtungszeit an die Geschwindigkeit linear angepasst zu steuern, hier also entsprechend um den Faktor 4 zu vergrößern. Da dabei eine Überbelichtung in der Diodenzeile eintreten könnte, empfiehlt es sich, zusätzlich die Intensität der Laserbeleuchtung in diesem Falle abhängig von der Geschwindigkeit des Messfahrzeuges zu verringern.

Alternativ können bei fester Belichtungszeit vom Auswerterechner zeitlich aufeinanderfolgende Messwerte zur Mittelwertberechnung herangezogen werden.

Die Figuren 4A, 4B zeigen gebräuchliche Fahrdraht-Querschnitte mit Schleiffläche 101 und Resthöhe R.

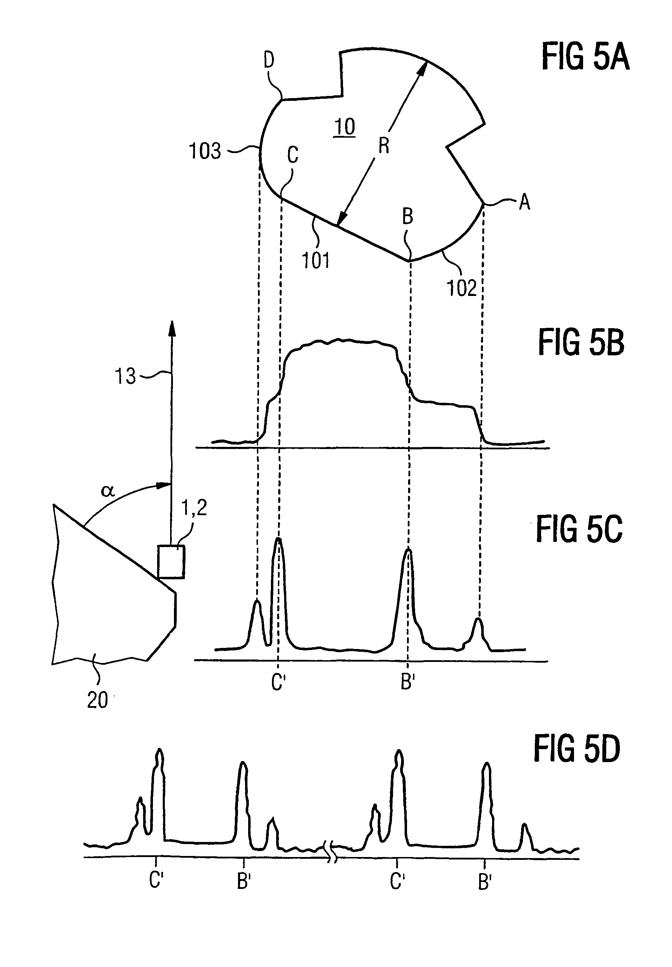

Die Videosignale der Pixel-Sensorzeile der Zeilenkamera 2 und ggf. 2' der erfindungsgemäßen Einrichtung werden einer elektronischen Auswerteeinheit 50 mittels der Leitungen 51 zugeführt. Diese kann z.B. ein Personalcomputer 53 und eine Bildspeicherkarte 52 mit digitalen Signalprozessoren zur Vorverarbeitung der Signale der Zeilenkamera sein. Zum besseren Verständnis der Maßnahmen der Auswertung der erhaltenen Videosignale, nämlich um aus diesen das aktuelle Maß des Querschnitts des augenblicklich inspizierten Fahrdrahtstückes zu ermitteln, dient die Figur 5.

Zunächst sei auf die Figur 5A verwiesen, die einen Querschnitt eines im Gebrauch abgeschliffenen Fahrdrahtes 10 nach Figur 4A zeigt. Die in Figur 5 gezeigte Schräglage des Fahrdraht-Querschnittes 10 entspricht einer wie in Figur 1 gezeigten, im Winkel α schräg gerichteten Scheinwerferbestrahlung und Bildaufnahme mit der Kamera 2. Die Figur 5B zeigt beispielhaft den über die Breite A-D der Aufnahme des Fahrdrahtes 10 in der Auswerteeinrichtung 50 ermittelten Amplitudenverlauf des momentan erhaltenen Videosignals. Der Verlauf von A bis B entspricht der aktuell der Kamera 2 zugewandten Flanke bzw. Seitenfläche 102 des Fahrdrahts. Der Verlauf zwischen C und D entspricht dem Videosignal der gegenüberliegenden Seitenfläche 103 des Fahrdrahtes. Die durch mit dem Schleifer des Stromabnehmers im vorangegangenen Fahrbetrieb erzeugte Verschleiß-Schleiffläche 101 ergibt den Amplitudenverlauf zwischen den Punkten B und C. Um die Punkte A, B, C und D der Übergänge, nämlich vom Hintergrund zu der einen Drahtflanke, zur Schleiffläche, zur gegenüberliegenden Drahtflanke und schließlich wieder zum Hintergrund, messtechnisch möglichst genau bestimmen zu können, wird als weitere Maßnahme der Erfindung das empfangene Videosignal V der Figur 5B differenziert. Dies ergibt ein Signalverlauf gemäß Figur 5C, in dem der Betrag des Gradienten des Signals V der Figur 5B mit deutlich erkennbaren Signalspitzen wiedergegeben ist. Besonders deutlich erkennbar sind die wichtigen Punkte B und C, und deren Abstand gibt das interessierende Maß der Breite der durch Abnutzung entstandenen Schleiffläche an.

Die Figur 5D zeigt analog der Figur 5C, jedoch verkleinert, das differenzierte Messergebnis, das bei einem Überlappungsbereich mit zwei nebeneinander geführten Drähten bzw. bei einem Doppelfahrdrahtsystem entlang der Zeile der Kamera zu erhalten ist.

Da der Abbildungsmaßstab und der Betrachtungswinkel α der Kamera, bezogen auf das Fahrzeugdach 20, bekannt sind, kann aus der Figur 5C zu entnehmenden Länge B'C' der wirkliche Wert der Breite B-C der aktuellen Schleiffläche auf dem Draht und daraus die interessierende Restdicke des Fahrdrahts 10 bestimmt werden. Der letztlich interessierende Wert für den Restquerschnitt bzw. für die Resthöhe R des Fahrdrahtes wird im Sinne eines zeitlich minimalen Rechenaufwandes einer Tabelle entnommen, in die die vorbekannte Drahtdicke und die erfindungsgemäß ermittelte Breite der Schleiffläche als Eingangswerte eingegeben werden. Diese Tabelle wird einmalig für das jeweilige Sollprofil erstellt.

In Figur 1 ist der Winkel α zwischen dem Fahrzeugdach 20 und dem Fahrdraht 10 mit dem Scheitel des Winkels am Ort des Elementepaares 1, 2 eingetragen. Das von der Kamera 2 bei diesem gegebenen Winkel α gesehene Abstandsmaß A-D entspricht dem Durchmesser des Fahrdrahtes, nämlich soweit dieser einen kreisförmigen Querschnitt hat, wie er für den Fahrdraht nach Figur 5A gilt. Das Maß dieses Durchmessers unterliegt keinem Verschleiß infolge des Entlanggleitens des Stromabnehmers.

Ist das Maß dieses Durchmessers jedoch örtlich deutlich geringer als der Sollwert des Durchmessers des Fahrdrahts, liegt dort eine Einschnürung des Fahrdrahtes vor, nämlich wie sie oben eingangs bereits erwähnt worden ist und ebenfalls mit der Inspektion festzustellen ist.

Wie aus einem Vergleich der Figuren 4A und 4B mit Hilfe der voranstehenden Ausführungen zu erkennen ist, erlaubt die soweit voranstehend beschriebene Messung eine eindeutige Aussage nur für wie in Figur 4A gezeigten kreisförmigen Drahtquerschnitt. Für nahezu rechteckige Fahrdrähte, wie sie Figur 4B als Querschnitt zeigt, die zudem auch noch tordiert aufgehängt sein können, ist eine Messung von zwei einander gegenüberliegenden Seiten sogar erforderlich. Dies ist bereits in Figur 1 mit der Anordnung eines zweiten Elementepaares, bestehend aus Scheinwerfer 1' und Kamera 2' gezeigt. Die beiden Elementepaare 1, 2 und 1', 2' sind, wie aus Figur 1 zu entnehmen, vorzugsweise symmetrisch auf gegenüberliegenden Seiten, bezogen auf die Fahrdrahtposition 10, angeordnet. Für die Anordnung und Ausführung und Signalauswertung des zweiten Elementepaares 1', 2' gelten die obigen Ausführungen sinngemäß, z.B. die Positionierung entsprechend der Scheimpflug-Regel, bezüglich der fakultativ zusätzlichen Schwenkung um die Achse F und dergleichen. Für das zweite Elementepaar 1', 2' gilt die Figur 3A in spiegelsymmetrischer Ansicht.

Zur Ermittlung des Restquerschnittes bzw. der Resthöhe von Fahrdrähten mit rechteckigem Querschnitt, nämlich wie in Figur 4B gezeigt, die mit unbekanntem Torsionswinkel aufgehängt sind, ist neben der Messung der Breite der Fläche, an der der Stromabnehmer schleift, auch die Messung des sichtbaren Durchmessers mittels der beiden Kameras 2 und 2' auszuführen. Erst dadurch ist ein eindeutiges Messergebnis zu erhalten. Um die Rechendauer zu minimieren, ist auch in diesem Falle die Verwendung einer Tabelle zweckmäßig.

Es ist vorteilhaft, die zuletzt beschriebene Ausführung der Erfindung mit wie angegebenen zwei Elementepaaren 1, 2 und 1', 2' auch für zu inspizierende kreisförmige Fahrdrähte zu verwenden. Die doppelte Messung, die zeitlich keinerlei Zusatzaufwand fordert, gewährleistet eine nicht unerhebliche Erhöhung der Messgenauigkeit mit einer wie erfindungsgemäßen Einrichtung.

Schließlich sei noch auf die generellen Vorteile der erfindungsgemäßen Einrichtung gegenüber Einrichtungen des Standes der Technik hingewiesen:

Die erfindungsgemäße Einrichtung ist auf dem Dach 20 eines Fahrzeugs in großem Abstand vom Fahrdraht angebracht und positioniert. Es ist hier nicht erforderlich, dass der Fahrdraht berührt wird. Insbesondere kann damit sogar vorteilhafterweise die bei einer zeitgleich separat durchgeführten Messung der aktuellen Höhenlage des Fahrdrahts zwangsläufig den Messwert störende Berührung des Fahrdrahtes vermieden werden, wie sie bei Vorhandensein eines Stromabnehmers eintritt. Vorzugsweise wird daher die erfindungsgemäße Einrichtung auf dem Dach eines nicht elektrisch betriebenen Fahrzeugs, insbesondere einer Diesellok angebracht.

Ein ständiges Nachführen der Optik der Einrichtung zum Ausgleich der zwangsläufigen Seitenbewegungen des Fahrdrahtes infolge der Zickzack-Aufhängung ist bei der Erfindung entbehrlich.

Mit der Erfindung kann die Resthöhe von Drähten mit sowohl kreisförmigem als auch rechteckigem Querschnitt ermittelt werden, wodurch die Universalität der erfindungsgemäßen Einrichtung erweitert oder sogar vollständig ist.

Es können mit der Erfindung auch in wenigstens etwa gleicher Höhe nebeneinander liegende Drähte vermessen werden. Die Anzahl der gleichzeitig messbaren Drähte ist sogar nahezu beliebig. Ihr wechselseitiger Abstand voneinander muss nur größer als der Drahtdurchmesser sein. Dieser Vorteil ist insbesondere dort erheblich, wo im Überlappungsbereich der Fahrdrähte streckenweise (über 150 m weit) für den Übergang vom einen Fahrdrahtende zum folgenden Fahrdrahtanfang nebeneinander laufende Fahrdrähte vorhanden sind.

An sich stören auch bei der Erfindung die den Fahrdraht von oben her haltenden Klemmen die vorgesehene Bildauswertung. Mit der Erfindung ist aber zumindest eine ungestörte, zuverlässige Messung der Breite B-C der Schleiffläche durchführbar. Bei den mit Durchlicht arbeitenden bekannten Systemen ist die Messung an der Stelle einer Klemme zumindest fehlerhaft, wenn nicht sogar unbrauchbar.

Mit der erfindungsgemäßen Einrichtung kann das Maß des Verschleißes des Fahrdrahtes auch dann zuverlässig bestimmt werden, wenn der Fahrdraht tordiert aufgehängt ist und der Torsionswinkel zudem wechselnd und/oder unbekannt ist.

Vorangehend ist die Erfindung für Fahrdrähte elektrisch betriebener Bahnen beschrieben. Sinngemäß ist die Erfindung auch bei Oberleitungen von z.B. Oberleitungs-(Trolley-)Bussen anzuwenden. Hierzu sind einige Variationen und/oder Ergänzungen vorzusehen. Die Signale der zwei parallel verlaufenden Fahrdrähte treten aber auch hier als eindeutige Diagnoseaussage separiert auf, wie aus Figur 5D sinngemäß zu entnehmen. Für das Fahrzeug sind ggf. Maßnahmen vorzusehen, dass der bei der Inspektionsfahrt einzuschlagende Fahrweg nicht mehr als die Messung störend vom Fahrdrahtverlauf abweicht, der üblicherweise hier keinen Zickzackverlauf hat.

## Patentansprüche

1. Einrichtung zur optischen Erfassung des Verschleißes an Fahrdrähten (10) von Oberleitungen für elektrisch betriebene Fahrzeuge,
mit wenigstens einer Beleuchtungseinheit mit Scheinwerfer (1, 1') zur Beleuchtung eines jeweiligen Streckenstückes des Fahrdrahtes (10),
mit wenigstens einer Zeilenkamera (2, 2') mit Objektiv (21) und Bildebene (22) zur zeilenweisen Bildpunktaufnahme eines augenblicklich beleuchteten Streckenstückes des Fahrdrahts (10) und
mit einer für die Bildauswertung vorgesehenen elektronischen Auswerteeinheit (50),
wobei ein Scheinwerfer (1, 1') und eine Zeilenkamera (2, 2') zusammen (1, 2; 1', 2') im Dachbereich (20) an einem Fahrzeug (120), dieses vorgesehen zum Fahren entlang des zu inspizierenden Fahrdrahtes (10) gemeinsam nahe beieinander und auf den Bereich (G) des variabel positionierten Vorhandenseins des Fahrdrahtes (10), ausgerichtet angeordnet sind,
wobei der Scheinwerfer (1, 1') eine Halbleiter-Laserlichtquelle ist, der eine zylindrische Optik für die Bildung eines Beleuchtungsfächers (3, 3') mit einem Öffnungswinkel (γ) und mit einigen Millimeter Dicke des Fächers vorgesetzt ist, und
wobei wenigstens die Objektivebene (21) oder/und die Bildebene (22) der Kamera (2, 2') für sich in ihrer Position und Ausrichtung zu der optischen Achse (121) der Kamera um eine einzige Schwenkachse (F, F₀, F₀') abhängig von der im Betrieb augenblicklichen Höhenlage des Fahrdrahtes (10' - 10"), die mittels einer Einrichtung zur Höhenlagebestimmung ermittelbar ist, gesteuert schwenkbar (P) angeordnet ist/sind für eine der Inspektion genügende Scharfeinstellung des Fahrdrahts in der Abbildung in der Bildebene gültig für alle seine möglichen Höhenlagen, wobei diese Schwenkachse parallel zur Fahrtrichtung des Fahrzeugs (120) bzw. senkrecht zur Ebene des Beleuchtungsfächers (3, 3') ausgerichtet ist und ihre Position definiert ist durch die wenigstens eine Schnittgerade wenigstens zweier solcher Objektivebenen (21ᵢ, 21ⱼ, 21ₖ) oder/und Bildebenen (22ₐ, 22_{b}), in denen der Fahrdraht in vorgebbar ausgewählten Höhenlagen gemäß der Scheimpflug-Regel auf scharfe Abbildung eingestellt ist.

2. Einrichtung nach Anspruch 1, wobei
die Position der Achse (F) für die Schwenkung (P) der Bildebene oder der Objektivebene definiert ist durch die Schnittgerade, die sich ergibt aus dem Schnitt 1.) der Bildebene (22ₐ) oder der Objektivebene, diese in der Position und Ausrichtung für Scharfeinstellung gemäß der Scheimpflug-Regel für Position des Fahrdrahts (10") in etwa seiner niedrigsten Höhenlage mit 2.) der Bildebene (22_{b}) oder der Objektivebene, diese in der Position und Ausrichtung für Scharfeinstellung gemäß der Scheimpflug-Regel für die Position des Fahrdrahts in einer vorgebbar gleich oder etwas höher als die Norm-Höhenlage für den Fahrdraht. (Figur 3A)

3. Einrichtung nach Anspruch 1, wobei
die Position der Achse (F₀) für die Schwenkung (P) ermittelt ist aus zum einen der Schnittgeraden (F1), die sich ergibt aus dem Schnitt 1.) der Objektivebene (21ᵢ) oder der Bildebene, diese in der Position und Ausrichtung für Scharfeinstellung gemäß der Scheimpflug-Regel für Position des Fahrdrahts in etwa einer niedrigsten Höhenlage mit 2.) der Objektivebene (21ⱼ) oder Bildebene, diese in der Position und Ausrichtung für Scharfeinstellung gemäß der Scheimpflug-Regel für Positionen des Fahrdrahts in einer mittleren vorgebbaren Höhenlage,
und aus zum anderen der Schnittgeraden (F2), die sich ergibt aus dem Schnitt 1.) der Objektivebene (21ₖ) oder der Bildebene, diese in der Position und Ausrichtung für Scharfeinstellung gemäß der Scheimpflug-Regel für Positionen des Fahrdrahts in etwa einer höchsten Höhenlage mit 2.) der ObjektivEbene (21ⱼ) oder der Bildebene, diese in der Position und Ausrichtung für Scharfeinstellung gemäß der Scheimpflug-Regel für die vorgenannte Fahrdrahtposition in mittlerer Höhenlage und wobei die Position der Achse (F₀) für die in der Einrichtung für die Objektivebene oder die Bildebene vorgesehene Schwenkung (P) auf eine solche zwischen den Positionen der beiden vorgenannten Schnittgeraden (F1 und F2) ausgewählt bestimmt ist. (Figur 3B)

4. Einrichtung nach Anspruch 3, wobei
die Position der Achse (F₀) für die Schwenkung (P) ermittelt ist mit zusätzlich einer Schnittgeraden (F₃), die sich ergibt aus dem Schnitt 1.) der Objektivebene (21ₖ) oder der Bildebene, diese in der Position und Ausrichtung für Scharfeinstellung gemäß der Scheimpflug-Regel für Positionen des Fahrdrahts in etwa einer höchsten Höhenlage mit 2.) der Objektivebene (21ᵢ) oder der Bildebene, diese in der Position und Ausrichtung für Scharfeinstellung gemäß der Scheimpflug-Regel für Position des Fahrdrahts in etwa einer niedrigsten Höhenlage und wobei die Position der Achse (F₀) für die in der Einrichtung für die Objektivebene oder die Bildebene vorgesehene Schwenkung (P) auf eine solche Position im Bereich zwischen den Positionen der erstgenannten Schnittgeraden (F₁, F₂) mit Berücksichtigung der seitlich abgelegenen Position der letztgenannten Schnittgeraden (F₃) ausgewählt bestimmt ist. (Figur 3B) .

5. Einrichtung nach Anspruch 3 oder 4, wobei
für die Position der für die Schwenkung (P) vorgesehenen Achse (F₀) noch mehr als drei Schnittgeraden zugrundegelegt werden, die sich aus jeweils dem Schnitt zweier Objektivebenen oder Bildebenen ergeben, für die Scharfeinstellung gemäß der Scheimpflug-Regel für den Fahrdraht in einer seiner vorgebbaren Höhenlage gilt.

6. Einrichtung nach Anspruch 3, 4 oder 5, wobei
bei dieser die Position einer für die Schwenkung der Objektivebene (21) oder der Bildebene (22) vorgesehenen korrigierten Achse (F₀'), diese Position zwischen den Positionen der genannten Schnittgeraden (F₁, F₂, F₃...) jeweils zweier nach der Scheimpflug-Regel positionierter und ausgerichteter Ebenen liegend, bestimmt ist durch eine solche Einstellung der Position dieser korrigierten Achse (F₀'), für die die Summe der Quadrate der Winkelabweichungen (d, d', d") der eingestellten Objektivebenen/Bildebenen ein Minimum ist, wobei die jeweilige Winkelabweichung (d, d', d") diejenige ist, die vorliegt zwischen der Ausrichtung jeweils derjenigen Objektivebene (21, 21', 21") oder Bildebene, die sich bei der Schwenkung um eine noch nicht derart korrigierte Achse (F₀) für eine gegebene Höhenlage des Fahrdrahts ergibt und der Ausrichtung der korrespondierenden Objektivebene (21ᵢ, 21ⱼ, 21ₖ) oder Bildebene, für die die Scheimpflug-Regel für die Abbildung des Fahrdrahts exakt erfüllt ist.

7. Einrichtung nach einem der Ansprüche 3 bis 6, wobei
die Positionierung der Achse für das Schwenken (P) der Objektivebene oder/und der Bildebene um diese Achse entlang der Geraden (S₀) der Positionierungen der Schnittgeraden (S' , S, S") von nach der Scheimpflug-Regel exakt ausgerichteten Objektiv- und Bildebenen für unterschiedliche Fahrdrahthöhe mittels eines Gestänges veränderbar ausgeführt ist, wobei diese laterale Führung der Position der Achse abhängig von der augenblicklichen Höhenlage des Fahrdrahts gesteuert vorgesehen ist.

8. Einrichtung nach einem der Ansprüche 1 bis 7, wobei die
bei dieser Einrichtung aufeinander abgestimmte Schwenkung von Objektebene und Bildebene um jeweils nur eine einzige Schwenkachse vorgesehen ist.

9. Einrichtung nach einem der Ansprüche 1 bis 8, wobei
für den Scheinwerfer (1, 1') eine Laserdiode vorgesehen ist, die mit mehreren Emittern ausgeführt ist, die in so großem Abstand voneinander in der Diode angeordnet sind, dass Inkohärenz der Laserstrahlung der einzelnen Emitterstrecken vorliegt.

10. Einrichtung nach einem der Ansprüche 1 bis 9, wobei
der Scheinwerfer (1, 1') eine Rasterlinsenoptik für Einhaltung der Laser-Strahlenschutzbestimmungen umfasst.

11. Einrichtung nach einem der Ansprüche 1 bis 10, wobei
auf dem Fahrzeug (120) zwei Elementepaare, jedes mit Scheinwerfer (1, 1') und Kamera (2, 2'), vorgesehen sind, die quer zur Richtung des Fahrdrahts ausgerichtet im Abstand voneinander angeordnet sind und die so ausgerichtet sind, dass der Fahrdraht von unten aus zwei sich schneidenden Richtungen (Winkel +α, -α) angestrahlt wird und der Beleuchtungsfächer (3) des einen Paares und der (3') des anderen Paares so justiert ausgerichtet sind, dass diese beiden Beleuchtungsfächer (3, 3') zueinander von miteinander durchdringend bis nahe hintereinander parallel liegend positioniert ausgerichtet sind.

12. Einrichtung nach einem der Ansprüche 1 bis 11, wobei
der jeweilige Öffnungswinkel des Beleuchtungsfächers (3, 3') etwa 45° beträgt.

13. Einrichtung nach einem der Ansprüche 1 bis 12, wobei
der Scheinwerfer (1,1') ein Infrarot-Scheinwerfer ist.

14. Einrichtung nach einem der Ansprüche 1 bis 13, wobei
die Kamera (2, 2') eine oder mehrere Zeilen umfasst und eine Zeile in etwa der Größenordnung von 2¹² Sensorelemente hat.

15. Einrichtung nach einem der Ansprüche 1 bis 14, wobei
die Brennweite der Kamera auf etwa 80 bis 150 mm bemessen ist.

16. Einrichtung nach einem der Ansprüche 1 bis 15, wobei
die Auswerteeinheit (50) einen Personalcomputer (53) und eine Bildspeicherkarte (52) mit digitalen Signalprozessoren umfasst.

17. Einrichtung nach einem der Ansprüche 1 bis 16, wobei
zur Auswertung des Messergebnisses das mit der Auswerteeinheit (50) ermittelte Signalergebnis einer Einheit zur Differenzbildung zuführbar ist.

18. Einrichtung nach einem der Ansprüche 1 bis 17, wobei
die aktuelle Höhenlage des Fahrdrahtes anhand der scharfen Abbildung desselben auf der Bildebene der Kamera ermittelbar ist.

19. Einrichtung nach einem der Ansprüche 1 bis 18, wobei
die Belichtungsdauer derart einstellbar ist, dass der Aufnahmebereich der Kamera (2, 2') während der Fahrt eine Länge des Fahrdrahtes von ca. 10 mm detektiert.

20. Einrichtung nach einem der Ansprüche 1 bis 19, wobei
die Belichtungsdauer derart einstellbar ist, dass der Aufnahmebereich der Kamera (2, 2') etwa 10 mm Länge des Fahrtdrahtes für jede Aufnahme n während der Fahrt innerhalb vorgegebener Belichtungsdauer beträgt und
- dass aus n-mal unmittelbar aufeinander folgenden Aufnahmen der Kamera (2, 2') eine Auswerteeinheit (50) einen Signalverlauf liefert, der einer Mittelung der Signalwerte aus den jeweils n Aufnahmen entspricht.

21. Einrichtung nach einem der Ansprüche 1 bis 20, wobei
die Belichtungsdauer der Kamera abhängig von der Fahrtgeschwindigkeit des Fahrzeuges (120) proportional steuerbar ist.

22. Einrichtung nach einem der Ansprüche 1 bis 21, wobei
die Intensität der Beleuchtung durch den Scheinwerfer (1, 1') umgekehrt proportional der Belichtungsdauer der Kamera (2, 2') steuerbar ist.

23. Einrichtung nach einem der Ansprüche 1 bis 22, wobei
die Einstellung sämtlicher Parameter an der Einrichtung derart wählbar ist, dass für die Aufnahme des Fahrdrahtes mit der Kamera (2, 2') eine Bildauflösung quer zur Längsrichtung des Fahrdrahtes (10) im Bereich von einigen Zehntel Millimetern erreichbar ist.

24. Einrichtung nach einem der Ansprüche 1 bis 23, wobei
die Einrichtung auf einem Fahrzeug (120) angebracht ist, womit die Inspektion des Fahrdrahtes (10) berührungslos durchführbar ist.

25. Einrichtung nach Anspruch 24, wobei
eine Lokomotive mit Dieselantrieb als Fahrzeug (120) für die Montage der Einrichtung vorhanden ist.

## Claims

1. Device for optical recording of the wear in the contact wires (10) of overhead lines for electrically-operated vehicles,
with at least one illumination unit with a spot light (1, 1') for illuminating a section of a stretch of the contact wire (10) in each case,
with at least one line camera (2, 2') with lens (21) and image plane (22) for line-by-line raster scanning of a currently illuminated stretch of the contact wire (10) and
with an electronic evaluation unit provided for evaluating the images (50),
with a spotlight (1, 1') and a line camera (2, 2') arranged together (1, 2; 1' , 2') in the roof area (20) of a vehicle (120), which is provided for traveling along the contact wire (10) to be inspected, aligned close to one another and on the area (G) of the variably positioned presence of the contact wire (10), with the spotlight (1, 1') being a semiconductor laser source, in front of which is placed a cylindrical optic for forming an illumination slot (3, 3') with a beam angle (γ) and with a few millimeters of slot thickness, and
with at least the lens plane (21) or/and the image plane (22) of the camera (2, 2') being arranged so that they can be pivoted (P) in their position and alignment to the optical axis (121) of the camera around a single pivot axis (F, F₀, F_{0'}) depending on the current height of the contact wire (10' - 10"), which can be determined by means of a device for determining the height position for sharp focusing of the contact wire suitable for inspection in the image and in the image plane valid for all its possible height positions, with this pivot axis being aligned in parallel to the direction of travel of the vehicle (120) or at right angles to the plane of the illumination slot (3, 3') and its position being defined by the at least one angle of intersection of at least two such lens planes (21ᵢ, 21ⱼ, 21ₖ or/and image planes (22ₐ, 22_{b}), in which the contact wire is adjusted to specifiable selected height positions in accordance with the Scheimpflug rules for sharp imaging.

2. Device in accordance with claim 1, whereby
the position of the axis (F) for the pivot (P) of the image plane or the lens plane is defined by the line of intersection which is produced by the intersection 1.) of the image plane (22ₐ) or the lens plane, this being in the position and orientation for sharp focusing in accordance with the Scheimpflug rule for position of the contact wire (10") at around its lowest height position with 2.) of the image plane (22_{b}) or of the lens plane, this being in the position and orientation for sharp focusing in accordance with the Scheimpflug rule for the position of the contact wire in a predetermined same or slightly higher than normal position for the contact wire. (Figure 3A)

3. Device in accordance with claim 1, whereby
the position of the axis (F₀) for the pivot (P) is determined on the one hand by the line of intersection (F1) which is produced by intersection 1.) of the image plane (21ᵢ) or the lens plane, this being in the position and orientation for sharp focusing in accordance with the Scheimpflug rule for position of the contact wire at around its lowest height position with 2.) of the image plane (21ⱼ) or of the lens plane, this being in the position and orientation for focusing in accordance with the Scheimpflug rule for positions of the contact wire in a predetermined mid position and on the other hand from the line of intersection (F2), which is produced by the intersection 1.) of the image plane (21ₖ) or of the lens plane, this being in the position and orientation for focusing in accordance with the Scheimpflug rule for positions of the contact wire at around a highest height position with 2.) of the image plane (21ⱼ) or of the lens plane, this being in the position and orientation for sharp focusing in accordance with the Scheimpflug rule for position of the contact wire previously mentioned at a mid height position and with the position of the axis (F₀) being determined for the pivot (P) provided for the lens plane and the image plane to such a position selected between the positions of the two above-mentioned lines of intersection (F1 and F2). (Figure 3B)

4. Device in accordance with claim 3, whereby
the position of the axis (F₀) for the pivot (P) is determined with an additional line of intersection (F3), which is produced by the section 1.) of the image plane (21ₖ) or of the lens plane, this being in the position and orientation for sharp focusing in accordance with the Scheimpflug rule for positions of the contact wire at around a highest height position with 2.) of the image plane (21ᵢ) or the lens plane, this being in the position and orientation for focusing in accordance with the Scheimpflug rule for position of the contact wire at around a lowest height position and where the position of the axis (F₀) for the pivot (P) provided for the lens plane and the image plane is determined selectively to such a position in the area between the positions of the two above-mentioned lines of intersection (F₁, F₂) taking into consideration the side remote position of the previously-mentioned lines of intersection (F₃). (Figure 3B).

5. Device in accordance with claim 3 or 4, with
even more than three lines of intersection are used as a basis for the position of the axis (F₀) provided for the pivot (P), each produced by the intersection of two object planes or image planes, for which focusing in accordance with the Scheimpflug rule for the contact wire at its predeterminable height applies.

6. Device in accordance with claim 3, 4 or 5, whereby
with this the position of a corrected axis (F₀') provided for the pivoting of the lens plane (21) or the image plane (22) is defined, this position lying between the positions of the given lines of intersection (F₁, F₂, F₃...) of two of the planes positioned and aligned in accordance with the Scheimpflug rule,through such a setting of the position of this corrected axis (F₀'), for which the sum of the squares of the angular deviations (d, d', d") of the set lens planes/image planes is a minimum, with the relevant angle deviation (d, d', d") being that which is present between the orientation of those object planes (21, 21', 21") or image planes in each case which are produced for pivoting around an axis (F₀) not yet corrected in this way for a given height position of the contact wire and the alignment of the corresponding lens plane (21ᵢ, 21ⱼ, 21ₖ) or image plane for which the Scheimpflug rule for the imaging of the contact wire is exactly fulfilled.

7. Device in accordance with one of the claims 3 to 6, with the positioning of the axis for the pivoting (P) of the lens plane and /or the image plane is implemented to be modifiable around this axis along the straight lines (S₀) of the positionings of the lines of intersection (S', S, S") from exactly aligned lens and image planes in accordance with the Scheimpflug rule for different contact wire height by means of a rod, with this lateral guidance of the position of the axis being provided controlled as a function of the current height position of the contact wire.

8. Device in accordance with one of the claims 1 to 7, with the matched pivoting of object plane and image plane being provided around only one pivot axis in each case.

9. Device in accordance with one of the claims 1 to 8, with a laser diode being provided for the spotlight (1, 1') which is embodied with a number of emitters which are disposed at such a great distance from each other in the diode that incoherence of the laser radiation of the individual emitter paths is present.

10. Device in accordance with one of the claims 1 to 9, with the spotlight (1, 1') comprising a grid lens optic to comply with the laser radiation requirements.

11. Device in accordance with one of the claims 1 to 10, with two pairs of elements, each with a spotlight (1, 1') and camera (2, 2'), being provided which are aligned transverse to the direction of the contact wire with a gap between them on the vehicle (120) and which are aligned so that the contact wire is illuminated from below from two intersecting angles (angle +a, -a) and the illumination slots (3) of the one pair and those (3') of the other pair are aligned adjusted so that these two illumination slots (3, 3') are aligned from penetrating each other to lying closely in parallel behind one another.

12. Device in accordance with one of the claims 1 to 11, with the relevant aperture of the illumination slot (3, 3') amounting to around 45°.

13. Device in accordance with one of the claims 1 to 12, with the spotlight (1, 1') being an infrared spotlight.

14. Device in accordance with one of the claims 1 to 13, with the camera (2, 2') comprising one or more lines and a line being approximately 212 sensor elements in size.

15. Device in accordance with one of the claims 1 to 14, with the focal length of the camera being dimensioned to between 80 and 150 mm.

16. Device in accordance with one of the claims 1 to 15, with the evaluation unit (50) comprising a personal computer (53) and an image storage card (52) with digital signal processors.

17. Device in accordance with one of the claims 1 to 16, with for evaluation of the measurement result, the signal result determined with the evaluation unit (50) being able to be fed to a unit for forming the difference.

18. Device in accordance with one of the claims 1 to 17, with the current height position of the contact wire being determined on the basis of the sharp imaging of same on the image plane of the camera.

19. Device in accordance with one of the claims 1 to 18, with the exposure duration being able to be set such that the area recorded by the camera (2, 2') during its travel detects a length of contact wire of appr. 10 mm.

20. Device in accordance with one of the claims 1 to 19, with the exposure duration being selected such that the recording area of the camera (2, 2') amounts to around 10 mm in length of the contact wire for each recording n during the travel within a specified exposure duration and
- that from pictures taken by the camera (2, 2') n times directly after one another an evaluation unit (50) delivers a sequence of signals which corresponds to an averaging of the signal values from n pictures in each case.

21. Device in accordance with one of the claims 1 to 20, with the exposure time of the camera being able to be controlled as a proportional function of the speed of travel of the vehicle (120) .

22. Device in accordance with one of the claims 1 to 21, with the intensity of the illumination by a spotlight (1, 1') being conversely controlled proportionally to the exposure duration of the camera (2, 2').

23. Device in accordance with one of the claims 1 to 22, with the setting of all parameters on the device being able to be selected such that to record a picture of the contact wire with the camera (2, 2') an image resolution transverse to the direction of movement of the contact wire (10) in the range of a few tenths of millimeters can be achieved.

24. Device in accordance with one of the claims 1 to 23, with the device being accommodated on a vehicle (120), with which non-contact inspection of the contact wire (10) can be undertaken.

25. Device in accordance with claim 24, with a locomotive with a diesel engine being available as a vehicle (120) for installing the device.

## Revendications

1. Dispositif de détection optique de l'usure de caténaires (10) de fils aériens pour véhicules à traction électrique, comportant au moins une unité d'éclairage avec projecteur (1, 1') pour l'éclairage d'une section respective de la caténaire (10),
comportant au moins une caméra linéaire (2, 2') avec un objectif (21) et un plan d'image (22) pour l'enregistrement pixelaire ligne par ligne d'une section de la caténaire (10) éclairée momentanément et
comportant une unité d'évaluation (50) électronique prévue pour l'évaluation de l'image,
un projecteur (1, 1') et une caméra linéaire (2, 2') étant installée orientée ensemble (1, 2 ; 1', 2') dans la zone du toit (20) sur un véhicule (120), celui-ci étant prévu pour se déplacer le long de la caténaire (10) à inspecter conjointement à proximité l'un de l'autre et sur la zone (G) de la présence positionnée de manière variable de la caténaire (10),
le projecteur (1, 1') étant une source de lumière laser à semi-conducteur, devant laquelle est placée une optique cylindrique pour la formation d'un éventail d'éclairage (3, 3') avec un angle d'ouverture (γ) et à une épaisseur de quelques millimètres de l'éventail, et
au moins le plan de l'objectif (21) ou/et le plan de l'image (22) de la caméra (2, 2') étant installé(s) de manière pivotable (P) régulée pour soi dans leur position et leur orientation par rapport à l'axe optique (121) de la caméra autour d'un axe de pivotement unique (F, F₀, F₀') en fonction de la hauteur momentanée en service de la caténaire (10', 10"), qui peut être déterminée à l'aide d'un dispositif de mesure altimétrique, pour une mise au point précise de la caténaire répondant aux besoins de l'inspection dans la représentation dans le plan de l'image valable pour toutes ces hauteurs possibles, cet axe de pivotement étant orienté parallèlement au sens de la marche du véhicule (120) resp. perpendiculairement au plan de l'éventail d'éclairage (3, 3') et sa position étant définie par l'au moins une droite d'intersection d'au moins deux plans de l'objectif (21ᵢ, 21ⱼ, 21ₖ) de ce type ou/et de plans de l'image (22ₐ, 22_{b}), dans lesquels la caténaire est réglée sur une image nette dans des positions en hauteur sélectionnées prédéfinissables selon la condition de Scheimpflug.

2. Dispositif selon la revendication 1,
la position de l'axe (F) pour le pivotement (P) du plan de l'image ou du plan de l'objectif étant définie par la droite d'intersection, qui découle de l'intersection 1.) du plan de l'image (22ₐ) ou du plan de l'objectif, celui-ci dans la position et l'orientation pour la mise au point précise selon la condition de Scheimpflug pour la position de la caténaire (10") à sa hauteur approximativement la plus basse, avec 2.) le plan de l'image (22_{b}) le plan de l'objectif, celui-ci dans sa position et son orientation pour une mise au point précise selon la condition de Scheimpflug pour la position de la caténaire à une hauteur prédéfinissable égale ou légèrement supérieure à la hauteur standard pour la caténaire. (Figure 3A).

3. Dispositif selon la revendication 1,
la position de l'axe (F₀) pour le pivotement (P) étant déterminée à partir d'une part de la droite d'intersection (F1), qui découle de l'intersection 1.) du plan de l'objectif (21ᵢ) ou du plan de l'image, celui-ci dans la position et l'orientation pour la mise au point précise selon la condition de Scheimpflug pour la position de la caténaire à sa hauteur approximativement la plus basse, avec 2.) le plan de l'objectif (21ⱼ) ou le plan de l'image, celui-ci dans la position et l'orientation pour la mise au point précise selon la condition de Scheimpflug pour les positions de la caténaire à une hauteur moyenne prédéfinissable,
et à partir d'autre part de la droite d'intersection (F2), qui découle de l'intersection 1.) du plan de l'objectif (21ₖ) ou du plan de l'image, celui-ci dans la position et l'orientation pour la mise au point précise selon la condition de Scheimpflug pour les positions de la caténaire à sa hauteur approximativement maximale, avec 2.) le plan de l'objectif (21ⱼ) ou le plan de l'image, celui-ci dans la position et l'orientation pour la mise au point précise selon la condition de Scheimpflug pour la position précitée de la caténaire à hauteur moyenne et la position de l'axe (F₀) étant déterminée de manière sélectionnée pour le pivotement (P) prévu dans le dispositif pour le plan de l'objectif ou le plan de l'image sur un tel plan entre les positions des deux droites d'intersection susnommées (F1 et F2) (figure 3B).

4. Dispositif selon la revendication 3,
la position de l'axe (F₀) pour le pivotement (P) étant déterminée avec en plus une droite d'intersection (F3), qui découle de l'intersection 1.) du plan de l'objectif (21ₖ) ou du plan de l'image, celui-ci dans la position et l'orientation pour la mise au point précise selon la condition de Scheimpflug pour les positions de la caténaire approximativement à une hauteur maximale, avec 2.) le plan de l'objectif (21ᵢ) ou le plan de l'image, celui-ci dans la position et l'orientation pour la mise au point précise selon la condition de Scheimpflug pour la position de la caténaire approximativement à la hauteur minimale et la position de l'axe (F₀) pour le pivotement (P) prévu dans le dispositif pour le plan de l'objectif ou le plan de l'image, étant déterminé de manière sélectionnée sur une telle position dans la zone entre les positions des droites d'intersection (F1, F2) les premiers nommées compte tenu de la position écartée latéralement de la droite d'intersection (F3) nommée en dernier. (Figure 3B).

5. Dispositif selon la revendication 3 ou 4,
pour la position de l'axe (F₀) prévu pour le pivotement (P) plus de trois droites d'intersection étant prises pour base, qui découlent chacune respectivement de l'intersection de deux plans de l'objectif ou de l'image, pour lesquels la mise au point précise est applicable selon la condition de Scheimpflug pour la caténaire à l'une de ses hauteurs prédéfinissables.

6. Dispositif selon la revendication 3, 4 ou 5,
dans celui-ci la position d'un axe (F₀') corrigé prévu pour le pivotement du plan de l'objectif (21) ou du plan de l'image (22), cette position se trouvant entre les positions des droites d'intersection (F₁, F₂, F₃...) susmentionnées de deux plans respectivement positionnés et orientés selon la condition de Scheimpflug, étant déterminée par un tel réglage de la position de cet axe corrigé (F₀'), pour lequel la somme des carrés des écarts angulaires (d, d', d") des plans de l'objectif/de l'image réglés étant un minimum, l'écart angulaire (d, d', d") respectif étant celui existant entre l'orientation du plan de l'objectif (21, 21', 21") ou du plan de l'image respectif, qui découle lors du pivotement autour d'un axe (F₀) non encore corrigé de cette manière pour une hauteur donnée de la caténaire et entre l'orientation du plan de l'objectif (21ᵢ, 21ⱼ, 21ₖ) ou de l'image correspondante, pour lequel la condition de Scheimpflug est remplie exactement pour la représentation de la caténaire.

7. Dispositif selon l'une des revendications 3 à 6,
la position de l'axe pour le pivotement (P) du plan de l'objectif ou/et de l'image autour de cet axe étant exécutée de manière variable le long de la droite (S₀) des positionnements des droites d'intersection (S', S, S") des plans de l'objectif et de l'image orientés avec précision selon la condition de Scheimpflug pour différentes hauteurs de caténaire au moyen d'une tringlerie, ce guidage latéral de la position de l'axe étant prévu de manière contrôlée en fonction de la hauteur momentanée de la caténaire.

8. Dispositif selon l'une des revendications 1 à 7,
le pivotement adapté l'un à l'autre dans ce dispositif du plan de l'objectif et du plan de l'image étant prévu autour d'un seul et unique axe de pivotement respectivement.

9. Dispositif selon l'une des revendications 1 à 8,
une diode laser étant prévue pour le projecteur (1, 1'), cette diode étant exécutée avec plusieurs émetteurs, disposée à une distance tellement grande les uns des autres dans la diode qu'il y a incohérence du rayonnement laser des rangées d'émetteurs individuelles.

10. Dispositif selon l'une des revendications 1 à 9,
le projecteur (1, 1') comprenant une optique à lentilles à grille-paralume pour respecter les règlements de radioprotection laser.

11. Dispositif selon l'une des revendications 1 à 10,
deux paires d'éléments, chacune avec projecteur (1, 1') et caméra (2, 2'), étant prévues sur le véhicule (120), qui sont orientées perpendiculairement à la direction de la caténaire à distance l'une de l'autre et orientées de telle sorte que la caténaire est illuminée par le dessous à partir de deux directions se coupant (angle +α, -α) et l'éventail d'éclairage (3) de l'une des paires et l'éventail (3') de l'autre paire étant orientés de manière ajustée telle que ces deux éventails d'éclairage (3, 3') sont orientés positionnés l'un par rapport à l'autre et s'interpénétreront mutuellement jusqu'à être disposés en parallèle à proximité l'un derrière l'autre.

12. Dispositif selon l'une des revendications 1 à 11,
l'angle d'ouverture respectif de l'éventail d'éclairage (3, 3') étant d'environ 45°.

13. Dispositif selon l'une des revendications 1 à 12,
le projecteur (1, 1') étant un projecteur à infrarouge.

14. Dispositif selon l'une des revendications 1 à 13,
la caméra (2, 2') comprenant une ou plusieurs lignes et une ligne ayant approximativement la taille de 2¹² éléments de détection.

15. Dispositif selon l'une des revendications 1 à 14,
la distance focale de la caméra étant fixée à environ 80 à 150 mm.

16. Dispositif selon l'une des revendications 1 à 15,
l'unité d'évaluation (50) comprenant un ordinateur personnel (53) et une carte à mémoire d'image (52) avec des processeurs de signaux numériques.

17. Dispositif selon l'une des revendications 1 à 16,
le résultat des signaux déterminé par l'unité d'évaluation (50) pouvant être transmis à une unité pour effectuer la différenciation aux fins d'évaluation du résultat de la mesure.

18. Dispositif selon l'une des revendications 1 à 17,
la hauteur actuelle de la caténaire pouvant être déterminée à l'aide de l'image nette de celle-ci sur le plan de l'image de la caméra.

19. Dispositif selon l'une des revendications 1 à 18,
la durée de l'exposition étant réglable de telle sorte que la zone d'enregistrement de la caméra (2, 2') détecte une longueur de la caténaire d'environ 10 mm pendant le trajet.

20. Dispositif selon l'une des revendications 1 à 19,
la durée d'exposition étant réglable de telle façon que la zone d'enregistrement de la caméra (2, 2') est d'environ 10 mm de long de la caténaire pour chaque enregistrement n pendant le trajet à l'intérieur d'une durée d'exposition présélectionnée et
- de telle sorte, qu'à partir de n enregistrements de la caméra (2, 2') se succédant directement, une unité d'évaluation (50) fournit un tracé de signal qui correspond à une moyenne des valeurs de signaux provenant des n enregistrements respectifs.

21. Dispositif selon l'une des revendications 1 à 20,
la durée d'exposition de la caméra étant réglable proportionnellement à la vitesse de déplacement du véhicule (120) .

22. Dispositif selon l'une des revendications 1 à 21,
l'intensité de l'éclairage par le projecteur (1, 1') étant réglable de manière inversement proportionnelle à la durée d'exposition de la caméra (2, 2').

23. Dispositif selon l'une des revendications 1 à 22,
le réglage de tous les paramètres étant sélectionnable sur le dispositif, de telle sorte, que pour l'enregistrement de la caténaire avec la caméra (2, 2') une résolution de l'image de l'ordre de quelques dizièmes de millimètres peut être obtenue perpendiculairement au sens longitudinal de la caténaire (10).

24. Dispositif selon l'une des revendications 1 à 23,
le dispositif étant installé sur un véhicule (120), ce qui permet d'effectuer l'inspection de la caténaire (10) sans contact.

25. Dispositif selon la revendication 24,
une locomotive à traction diesel étant présente comme véhicule (120) pour le montage du dispositif.
